# EUROPEAN PATENT SPECIFICATION

(11) **EP 1 393 289 B1**
(45) Date of publication and mention of the grant of the patent: **11.01.2006**
(21) Application number: 02730135.7
(22) Date of filing: 10.04.2002
(51) Int. Cl.: G09B 21/00

(54) **TELEPHONE FOR BLIND PEOPLE WHICH enables THE USE OF SMS**
FERNSPRECHER FÜR BLINDE, DER DIE VERWENDUNG VON SMS ermöglicht
TELEPHONE POUR NON VOYANTS permettant L'UTILISATION DE SMS

(30) Priority: 31.05.2001 IT MI20011163
(43) Date of publication of application: 03.03.2004
(73) Proprietor: Salpietra, Gianni, 20136 Milano (IT)
(72) Inventor: Salpietra, Gianni, 20136 Milano (IT)
(74) Representative: Ripamonti, Enrico
(86) International application number: PCT/EP2002/003969
(87) International publication number: WO 2002/097765

(56) References cited:
- DE-U- 29 919 123
- "TALX for the Nokia Communicator 9110/9110i" TORSTEN BRAND - SOFTWARE SERVICE, [Online] XP002214668 Retrieved from the Internet: <URL:http://web.archive.org/web/2001043004 5903/http://www.talx.de/index_e.htm> [retrieved on 2002-09-24]
- J. GJODERUM, H. HYPPÖNEN, K. NORDBY, S.-E. RUUD, J. EKBERG, M. MARTIN: "Guidelines-Booklet on Mobile Phones" COST 219, [Online] 11 April 2001 (2001-04-11), XP002214669 Retrieved from the Internet: <URL:http://www.stakes.fi/cost219/mobileph one.htm> [retrieved on 2002-09-24]
- PATENT ABSTRACTS OF JAPAN vol. 2000, no. 01, 31 January 2000 (2000-01-31) & JP 11 289409 A (RICOH CO LTD), 19 October 1999 (1999-10-19)

## Description

The present invention relates to a telephone according to the pre-characterizing portion of the main claim, such as known from DE 299 19 123 U1.

In the present context by telephone is to be meant a telephone connected to any known network of transmission, for example, fixed, cellular, via satellite.

On the telephones it is possible since long to transmit and receive alphanumeric written messages using an alphanumeric keyboard of the telephone or a connected one and to read them through a display of the telephone or a connected one. These messages in the present context will be referred to as SMS messages.

The known telephones do not allow the blind people to receive or transmit SMS messages.

Moreover, the known telephones and, particularly the cellular telephones, include a plurality of functions to be setup or controlled by means of interfaces that blind people cannot identify.

The object of the present invention is to realize a telephone that allows blind people to receive and transmit SMS messages.

A further object is to realize a telephone that could be used by blind people in all or most its performance.

These and other objects which will be apparent to the expert of the art are attained by a telephone in accordance with the characterizing portion of the accompanying claims.

The present invention will be more apparent from the accompanying drawings which are provided by way of nonlimiting example, and in which:
Figure 1 is a block diagram of a first possible embodiment of the invention;
Figures 2 and 3 are schematic views of some of the components of Figure 1;
Figures 4, 5, 6, 7, 8, 9 are schematic views of a telephone according to the invention, and are side, front and bottom views of the closed telephone, respectively and front and bottom views of the open telephone;
Figure 10 is a side and front view of a battery charger for a telephone;
Figures 11A, B, C, D; 12A, B, C, D; 13A, B, C, are side and front views of a key for a telephone according to the invention in different positions of use.

With reference to the said figures a telephone according to the invention comprises means 1 to receive and transmit telephone signals, having a keyboard 2, a microphone 3 and a loudspeaker 4, as well as an ordinary unit 5 for controlling and processing the telephone signals to be transmitted and received, connected to a conventional telephone network through an antenna 6 in the case of a telephone cellular or via satellite network or through a cable 6A in the case of a fixed network.

Moreover the control unit can be connected to memories 7 and/or to a reader 8 of SIM cards (if the telephone is a cellular telephone), as well as with other conventional components not shown.

A telephone of the type specified up to now and the pertinent components, except for the keyboard 2, that will be described in detail later on are of a conventional type and, therefore, will not be illustrated in detail afterwards.

The telephone according to the invention also comprises means 9 to transform the transmitted and/or received signals concerning SMS messages in a format fit to be received by means 10 (shown in detail later on) suitable for printing in a format which can be read by blind people.

When the processing unit 5 of the telephone receives a SMS message, it sends the same to the interface 9 connected to a processing and controlling unit 11 of a printer 12.

The function of recognition of the type of communication in/out is performed by the CPU that by the Sw of communication recognizes the "data string" and sends it to the corresponding interfaces. Therefore it is the Sw of communication that controls the interactions.

The interface 9 as well as the processing and controlling unit 11 are of a conventional type for the expert of the art and will not be illustrated in detail.

Also the printer 12 is of a usual type and provides a printing head 13, an element 14 to store a strip of paper to be printed, a motor 15 for feeding the paper and a sensor 16 for detecting the fed paper.

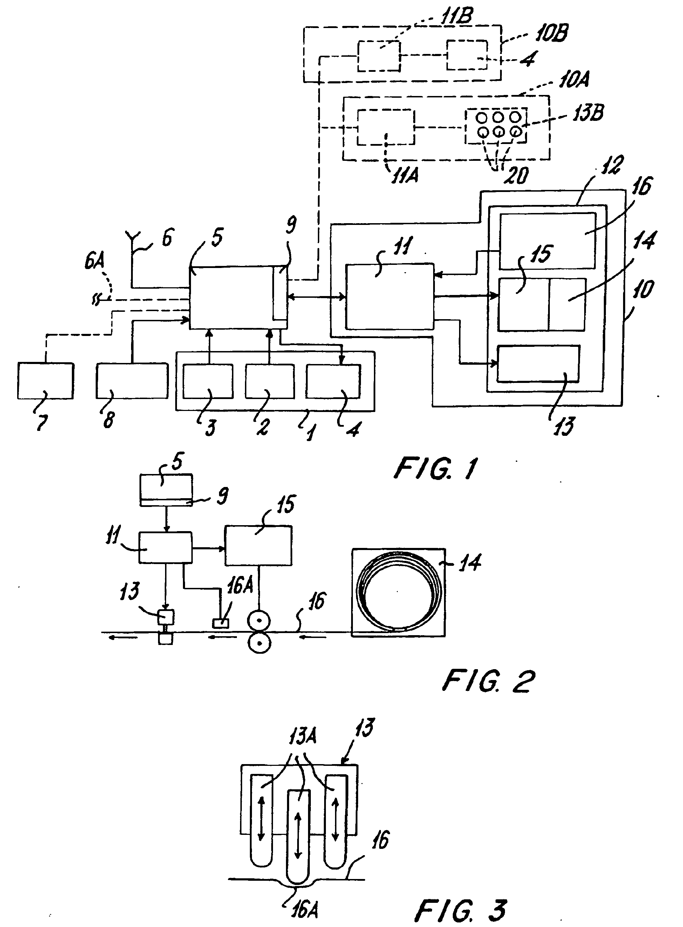

The controlling unit 11 receives from the interface 9 signals corresponding to the ASCII code of the text to be printed and operates the head printing 13 and the motor to feed the paper 15 so that the writing as received is printed on the paper. As also shown in figures 2 and 3.

The store 14 is a usual element suitable to lodge a paper ribbon 16 that passes through two opposed rolls 15A, B, one of which is in an idle position and one is connected to the motor 15, so that the strip of paper 16 is continuously fed to the printing head 13. The sensor 16 is provided to check the correct and continuous feeding of the paper ribbon to the printing head 13. This is, preferably a usual head with mobile punches 13A of the piezoelectric effect type to engrave on the paper ribbon deformations 16A representative of the letters of the Braille alphabet. The control unit 11 of the printer provides in fact that the punches 13A are activated so that the alphanumeric message that usually sets on the display of a conventional telephone and particularly the SMS messages appears on the strip of paper as Braille alphabet.

According to the invention the means 10 suitable for printing the SMS message are replaced by other conventional means suitable for transforming the telephone signals transmitted and/or received, concerning the SMS messages in a format which could be intelligible to blind people. The printing means are therefore replaced by one or more tactile elements 13B able to reproduce in sequence the letters of the alphabet Braille of the message that blind people could possibly "read".

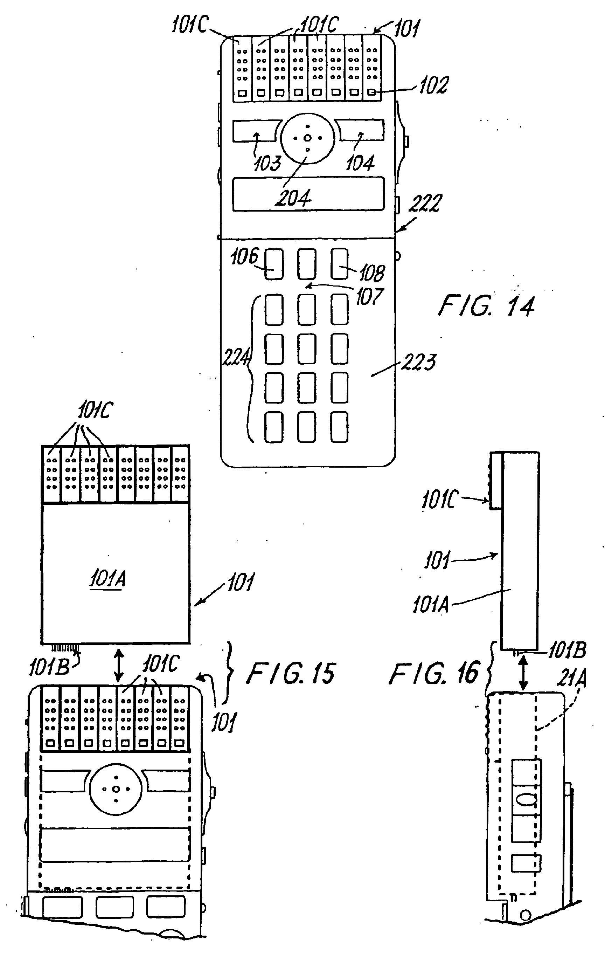

According to the invention the tactile elements 13B are one or more conventional cells of a Braille bar 101 (figures 14-16) and are connected to a usual operating and controlling unit 11A suitable to command the mobile parts 20 of said cell so that the letters of the Braille alphabet corresponding to the alphanumeric message SMS that is wanted to be made read by blind people are produced in sequence. The Braille bar 101 is movably connected to the telephone body which comprises in its upper part a seat 21A (figure 16) into which a main part 101A of the bar may be inserted. The main part 101A houses most of the electrical components of the bar and in its lower part comprises usual electrical connecting pins 101B which cooperate with ports (not shown) provided in the telephone body. In an upper window of the seat 21A there are located the actual piezoelectric bars 101C, each bar comprising a switch 102 for manually selecting a specific bar. For example, if the user reviewing on the bars its message finds an error in one bar, by pushing the corresponding switch 102 he may select that bar and correct the error. This type of Braille bar is of the known type and therefore will not be further described; it is produced for example by the German company Papenmeier and the Japanese company KGS. According to another embodiment to make intelligible the message to blind people vocal means 10B could be used with a usual processing unit 11B operating the loudspeaker 4.

The processing unit 11B realizes a vocal synthesis by operating the loudspeaker 4 in a such way that it produces a vocal message corresponding to the SMS message, that could possibly be intelligible to blind people.

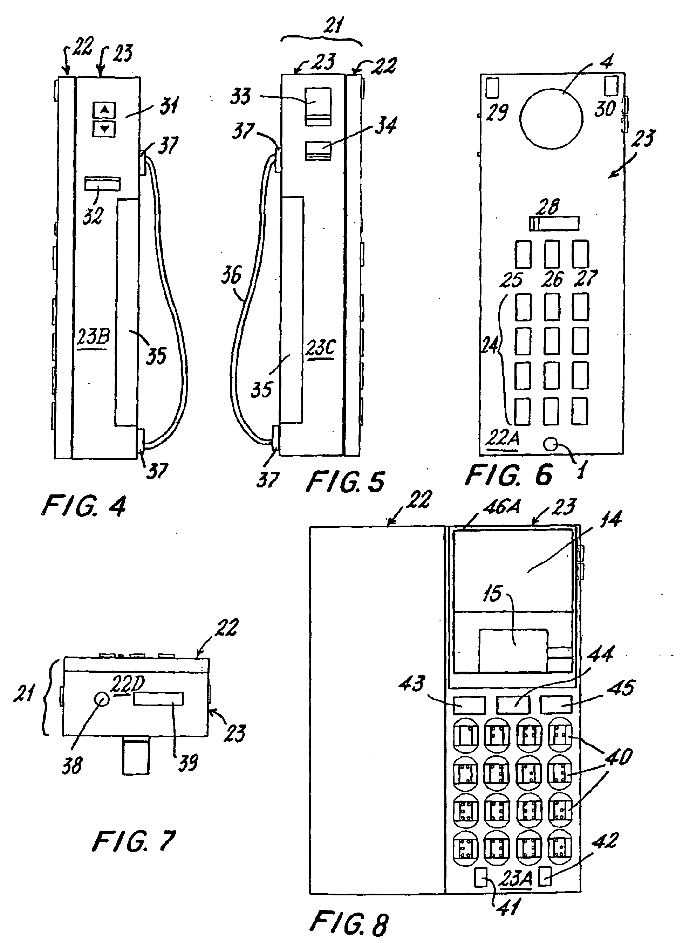

With reference to figures 4-9, they show a cellular telephone according to the invention, which includes a body 21 having two parts 22, 23 which can be closed as a book one on the other. The part 22 presents in its front face 22A: the microphone 1, the loudspeaker 4, a numerical keyboard 24, where the number corresponding to each key is shown on the external face of the keys in alphabet Braille, a key 25 to get or close the telephone line, a key 26 to send SMS messages, a key 27 to erase a received SMS message, a slide key 28 to activate and disconnect the answering service, two keys 29 and 30 to verify both the level, of reception of the telephone signal and the battery's charge.

The keys 29, 30 to verify the level of reception both of the telephone signal and the battery's charge are connected through the control unit 5 of the telephone to an organ able to give out a different acoustic signal for all detected levels of reception or charge (so, for instance, for a maximum level of reception of the signals four acoustic signal will be given and just one for the minimum level). Along its side surfaces 23B, 23C, the body 23 presents a couple of keys 31 to adjust the volume of the loudspeaker 4 and an outlet 32 for the ribbon of printed paper, preferably provided with a usual blade-key to cut the ribbon and a key 33 to switch on/off the telephone and a key 34 to adjust the volume of the loudspeaker or the ringing of telephone.

In correspondence of its rear face the body 23 presents a battery 35 and a strap 36 connected in a detachable way to the telephone by usual connection elements 37, for example of the jerky type. In its bottom face 23D the body 23 presents a usual outlet 38 for a battery charger and a usual outlet 39 for the connection with usual other accessories of the telephone. In correspondence of its front face 23A, the body 23 presents sixteen Braille alphabetic rotating keys 40, a key 41 to type in a space, a key "number" 42 that, pushed before the letters in Braille, codifies a number, not a letter (for example, typing in the key number 42 and subsequently the corresponding key to the letter "A" that will correspond to the number 1). The function activated by the numerical key 42 is active until the space key is activated. Moreover, a key 43 to select the composition of a SMS message, a key 44 to select the function of printing, a key 45 to erase the letter corresponding to the last key 40 selected are provided. The front face 23A of the body 23 also provides a cover 46, partially shown, to close a compartment 46A suitable to contain the motor 15 for feeding the ribbon of paper and the element 14 to store said ribbon. All the keys hereinbefore illustrated are connected in a conventional way to the central operating and controlling unit 5 of the telephone. All the keys, except for 40, have, on their external face and/or frontal face 22A of the body of the phone a symbol or a writing in the Braille language concerning the function for which said keys are meant. For this purpose the minimum keys dimensions are 4x7 (mm) and that is a great advantage.

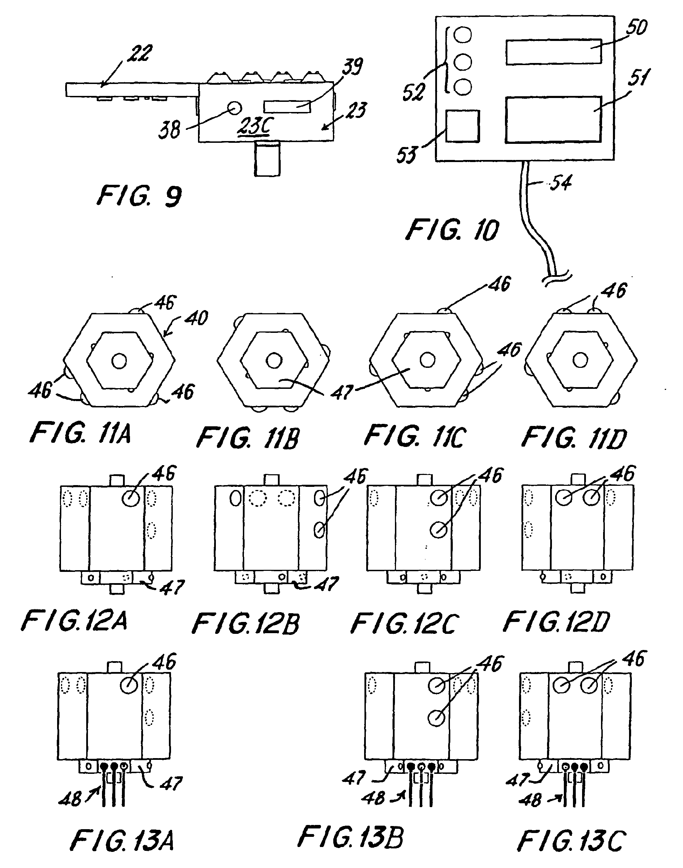

The keys 40 (also represented in figures 12-14) present, preferably, a parallelepipedal form having hexagonal bases and all side faces with dimensions at least equal to 4x7 (mm) in order to present the tactile smallest area for blind people. Particularly, three out of the six faces 40A present, in alternate, the universal Braille symbols corresponding to the different characters (for example figures 12A, 12C, 12D, 13A, 13C, 13D show the position corresponding to the letters A, B, C, respectively), special and not, and to the punctuation marks while the remaining three faces do not present any character (as represented in figures 12B, 13B). Each character is selected through rotations and subsequent pressure of the corresponding key face: the rotation is jerky, to facilitate the correct positioning during the composition of the messages. Particularly 42 letters have been chosen, with variants, and 6 signs for the punctuation marks. By these rotation keys 46, it is possible to considerably reduce the total number of the keys (with obvious advantages in terms of speed/easiness on composition and containment and limiting the dimensions of the telephone). The operation of these rotating keys takes place as follows: on an end of the hexagonal section key 40, a projection 47 is obtained having the same section as the key but slightly reduced, with relieves on it; under the pressure of the rotating key, through the underlying contacts, electric circuits 48 relative to the representation of the corresponding symbols Braille will be activated. Therefore, each pressure of the key corresponding to a letter causes the closing of a particular and univocal combination of contacts 48 (such as represented in figures 13A/14A, B, C) what will cause the sending of a corresponding univocal signal to the telephone control unit 5.

It is to be noted, that according to the invention, even if the keyboard with rotating keys has been described with reference to a telephone for blind people and Braille alphabet, it may be used in any other electrical devices and for any required alphabet or code, i.e. for alphabetical or numerical codes. The same also applies to the dimension of the rotating keys which may be different from that indicated, if the keyboard is not used by blind people. Also the shape of the rotating keys may be different and comprise a different number of faces, i.e. three, four, five , seven, eight.

With the telephone hereinbefore described it is possible to perform the following functions:

To switch "on" the telephone: by a slide key 33 with the univocal sign in Braille "on/off" on it.

To make a call: before or after dialling the number on the telephone keyboard 24, the line key 25 is activated. Should a mistake occur in typing, it is possible to deselect the number through the key "erase" 27; to end the conversation the same key "line" 25 is used. To answer to a call: the key "line" 25 is pressed; to end the conversation the same key "line" 25 is used. Refusal of a call: the key "erase" 27 is pressed. Activation/disconnection of the answering service by the proper slide key 28, with the sign in Braille "on/off" on it. To listening in the answering service by means of the code of telephone Provider, dialled on the numerical keyboard. Activation/disconnection of the block numerical keyboard by a pressure in a matched combination of keys 24, for example of the keys "*" and "#". Variation of the volumes of loudspeaker, keyboard and alarm: through the slide key 16 the function of the telephone whose volume is to be varied is selected, therefore through the pressure of the two keys 31/10 the variation of the intensity of the volumes will be obtained. Execution of the test for evaluating the battery charge through the pressure of key 30 that gives acoustically the requested information with a number of acoustic "beeps" (for example from 1 to 4) proportional to the percentage of compared position. Execution of the test of intensity of the telephone line signal is possible through the pressure of the key 29 that gives acoustically the information demanded with a number of acoustic "beeps" (for example from 1 to 4) proportional to said intensity. The tones of the acoustic beep are, preferably, different from those concerning the level of the battery.

To send SMS message the following operations are performed:
- opening of the front door 23 and access to the SMS section of the telephone,
- pressure of the key 43 function "SMS,"
- composition of the text through the inside keyboard 40,
- closing the door 23 of the telephone, dialling through the numerical keyboard 24 the telephone number to which the SMS message is to be sent and forwarding through the key "sends" 26 followed by an acoustic automatic confirmation, both when the forwarding has been brought to a conclusion or when it failed.

For the reception of a SMS message the following phases are provided:
- notification through acoustic signal and/ or vibration of the presence of a message,
- opening of the front door 23 and access to the SMS section of the telephone,
- printing in Braille alphabet of the text and the telephone number of the sender through pressure of the key "print" 44,
- cut of the printed text through the key "cutter" 32.

Should it happen that the arrival of a SMS is not heard in real time, it is possible to verify its presence at any moment pressing the key "printing"; if the message is present it's printed, otherwise an acoustic signal warns its absence.

The presence of an element of watermark in proximity of the end of the paper ribbon 16 is detected by the sensor 16A that activates an acoustic signal which allows the blind people to replace the ribbon of paper in time. If the paper run shorts before the complete printing of the message, a memory will preserve the message.

All the aforesaid functions are realized and implemented in a conventional way for the expert of the art by the operating and control units 5, 11 of the telephone.

In Figure 10 is represented a device 49 for the recharge of the battery 35 of the telephone through a connection to an electric net. The device comprises a cable 5 for connecting the electric net, a conventional lodging 50 for the only battery to recharge, a conventional lodging 51 for the telephone and the relative battery to recharge, indicators 52 of the level of reached position (complete, intermediary, null), a key 53 for the search of the telephone. The indicators 52 of the charge level reached could be of tactile type as represented in the Figures) or acoustic. The functions of battery's charge, of search of the telephone and of signalling of the reached charge level are of conventional type so they will not be illustrated in detail as well as the electronic components necessary for their realisation.

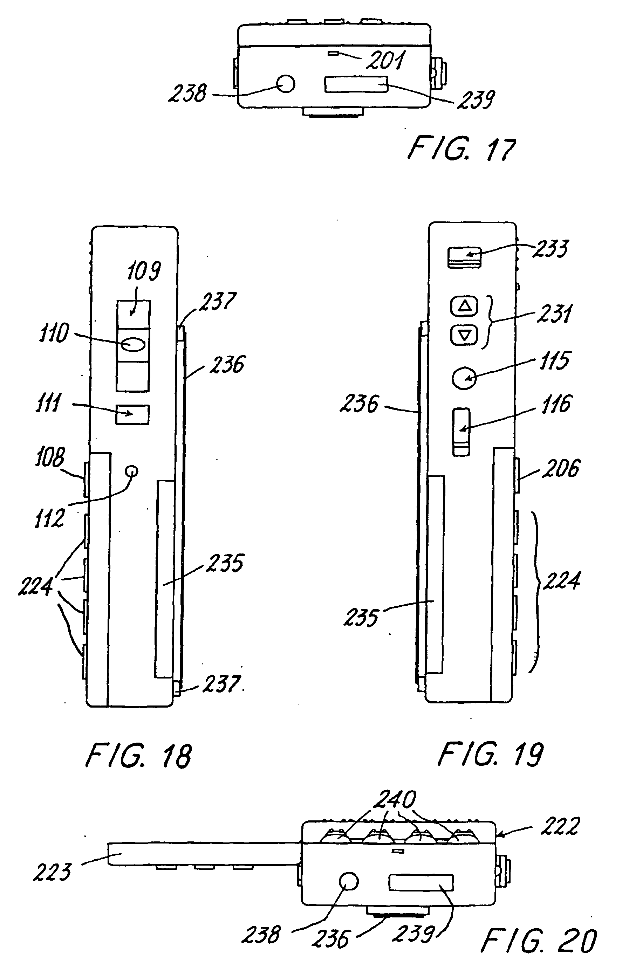

Figures 14-21 further explain the invention. Reference numbers to features common to the phone previously described are indicated in the drawings of this new embodiment with the same number used before plus 200, these features will not be further described.

The telephone comprises a base body 222 partly covered by a front door 223. The base body 222 comprises the upper seat 21A for the movable Braille bar 101. The bar 101 and its seat 21A are shaped in such a way that the surface 101C of these bars, which has to be touched, is almost on the same level as the upper face of the telephone. The Braille bar 101 comprises the switch 102 for manually select a specific bar. The phone also comprises: a key 103 for reading again a complete message on the Braille bar, and a key 104 for reading a subsequent string of eight characters on the Braille bar, and a conventional display 105. The display may be used by not blind people who wants to use the phone or to aid the blind to use it. It is to be noted that if the phone is to be used by people which can not see well but are not completely blind and do not know the Braille language, instead of the Braille Bar the phone may comprise a further conventional display (not shown) bigger than the display 105 for displaying the letters or numbers of the message to be read or to be written in large dimension, i.e. each letter or number having a dimension comprised between 0,5 and 4 cm.

It is to be noted the above feature of a phone with two different displays and in particular the additional feature that at least one display may reproduce the alphanumeric code to be displayed with dimension ranging from 0,5 to 4 cm, may be used in a phone for blind people but also in any other electrical devices and for displaying any required alphabet or code, in particular in electrical devices to be used by blind people.

According to the invention the second display is movably connected to a seat comprised in the base body 222 of the phone similar to the seat 21A (figure 16) described before. In this way the phone may use both a Braille bar or a second display depending on the user necessities.

The phone represented in figures 14-21 also comprises: a key 106 for connecting to the telephone line and a key 108 for disconnecting from said line, a key 107 for cancelling the last typed character or the character selected by pressing one of the Braille bar keys 102, keys 106-108 and numerical keys 224 are provided on the front face of the door 223 which does not close and protect the whole front face of the base body, but only its lower part.

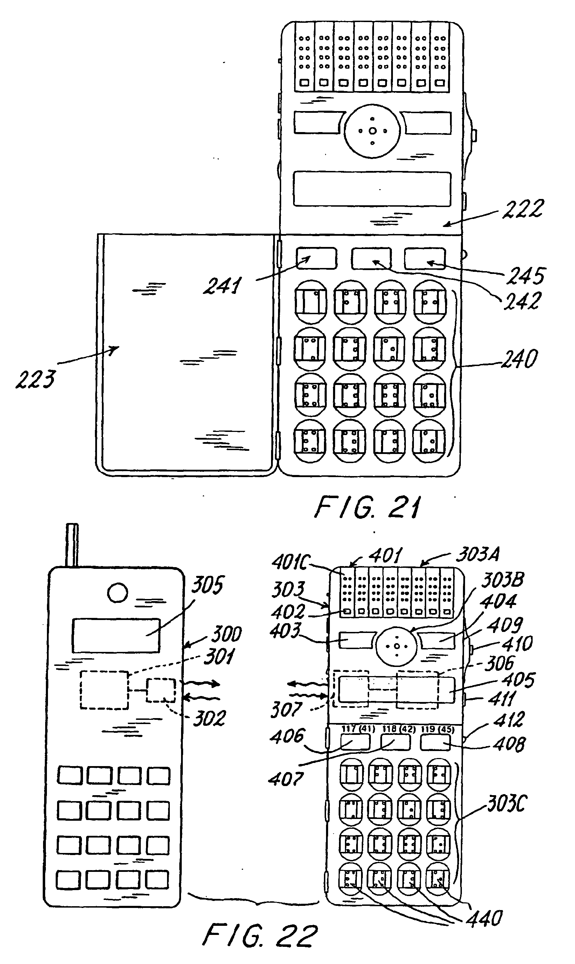

As represented in figure 21, the base body 222 of the phone comprises under the door 223 the rotating keys 240 and the keys 241, 242 245 already described in the previous embodiment (see description of the keys 41, 42, 45).

On its sides, the base body 222 comprises three keys 109-111 for accessing and selecting the different menu's options of the phone. Key 109 is slidable and may be moved up and down, and key 110 is carried by key 109 and may be pushed.

By pushing key 110 the menu may be opened, the phone automatically confirms this opening to blind people by displaying it on the Braille bar or by emitting a corresponding acoustic signal and/or message using the phone loudspeaker 204 and the phone control unit.

By moving key 109 up and down the menu may be scrolled, each movement corresponds to one "option" of the menu (for example phonebook, or messages or call services, call divert, or security). The phone automatically makes each menu "option" selected with key 109 intelligible to blind people by displaying it on the Braille bar or by emitting a corresponding acoustic signal or message.

By pushing key 110 the different "suboptions" of a menu "option" may be selected and then made accessible to the blind people as described before. By using key 109 the "sub option" may be further selected. For example for selecting a previously memorised phone number, first the menu is opened by pushing key 110 once, this will also produce a "feedback" intelligible for blind people, then with key 109 the phone book option is selected, is made intelligible to the blind, then it is selected with key 110, and then is scrolled with key 109 (for example until the letter "R" is selected) also this scrolling being made accessible to the blind. The scrolled option is confirmed with key 110 and again is scrolled with key 109 until the desired option is found (for example the name "Robert"), which is confirmed with key 110. All this steps are made intelligible to the blind in the same way as explained before. Once the name corresponding to the desired number to be called is found, it is enough to push the key 106 corresponding to a connection to the telephone line in order to place the desired call.

In order to facilitate the use of the menu keys, the base body 222 comprises a key 111 for cancelling the last selected option of the menu.

The menu based way of controlling the different function of the phone is well known in the art and will not be further described.

It is to be noted that with said menu based control of the phone many functions there may be implemented which in the embodiment described before are activated by dedicated keys (26-30, 34, 43-44) and/or many other usual functions common to phones.

The menu has also a new option called "history log" which comprises a list of the status of different features of the phone. Said features comprise information relating to different options or parts of the phone and of the telephone provider. By selecting an option of the "history log" menu the requested information will be made automatically accessible to the blind. For example the "history log" menu may comprise: the charging level of the phone battery, the level of the telephone line signal, the status of the call divert to an answering service or a telephone number, the number of the SMS comprised in the phone buffer or in the provider, the status of the piezoelectric bars, the status of alert key 112, the number of messages in the answering service, the number of e-mail stored by the provider, the status of an agenda for storing particular dates. As stated above, for example, by selecting the option relating to the number of SMS stored by the telephone provider, the controlling means of the phone will automatically contact the phone provider, obtain the requested information and make it available to the blind.

It is to be noted that that this menu base control of the phone comprising a feedback intelligible to blind people, corresponding to the selected menu option, may be used in any other electrical devices.

The base body comprises on its side a movable element 112 for signalling an event which was not detected by the user. This movable element is normally in a "down" position, i.e. its upper end lies on the same level as the base body side, if an event undetected by the blind takes place, the movable element will be automatically moved in an "up" position with its upper end projecting from the base body side (as represented in figure 14). This movable element is used to signal to the phone user events like an SMS message which was not read or a message in the answering device and similar events.

On its other side the phone comprises a key 233 to switch on and off, keys 231 for selecting the desired volume for the loudspeaker 204, a key 115 for selecting the recording of a voice message or a telephone conversation (this feature is common in the art and will not be described in detail), and a key 116 for selecting one or more of the possible option for made intelligible to the blind messages and features of the phone. Preferably said key is a snap key slidable in different positions, each corresponding to a possible feedback option for the blind. For example in a first position it may be selected a vocal feedback, in a second position a Braille bar feedback, in a third position both a vocal and Braille bar feedback.

A further embodiment of the invention is represented in figure 22 (reference number to features common to the phone previously described are indicated in the drawings of this new embodiment with the same number used before, plus 400), according to this solution the phone 300 may be usual but its control unit 301 comprises means 302 for exchanging and transmitting data with an external device 303 different and separated from the phone 300, which preferably comprises all the features of the previously described embodiments but which has no telephone transmitting means. This external device comprises a control unit 306 connected to all keys and means previously disclosed which makes intelligible by blind people all the usual features of a known mobile phone but which is not able to place telephone conversation. This control unit 306 is connected to transmitting means 307 for exchanging data with the phone 300 and in particular with its transmitting means 302.

Advantageously, the control means 301 of the phone 300 are able to send to the external device 303 each message which appears on the display 305 of the phone and are also able to receive from the external device data and or messages to be sent by the phone 300, like SMS messages, fax messages, e-mail, and signals to be used by the phone, like control signals for selecting the different features of the phone, for example signals corresponding to the different menu options of the phone.

The transmitting means 302, 307 for exchanging and transmitting data between the phone 300 and the external device 303 may be of every known type, they may comprise a cable which connects said means or every known wireless technology, like bluetooth, for example.

According to this embodiment external device is an input-output unit for blind people connected to an usual phone 300 which must be modified in a very simple way in order to be able to communicate with this unit. For example if a blind wants to send an SMS message with phone 300 it would be sufficient for him to write this message with the Braille keys 440, eventually to check the written message on the Braille bar 401 or by a vocal feedback, select the desired telephone number for the SMS message (by using the numeric keys 224 (not shown in figure 22) or the phonebook of the external device menu) and send this data to the phone 300 which may automatically forward this message to the desired telephone number. The same happens for an incoming SMS message. The phone will send this SMS message to the external device 303 which will display this message on the Braille bar 401 or vocally by means of the loudspeaker 303B. As in the previous embodiments, the blind may be warned of an incoming message by an acoustic signal and/or by the activation of key 412.

It is to be noted that even if the external device has been described with reference to a telephone for blind people and Braille alphabet, it may be used to interact with any other electrical device which can be used by blind people and requires message to be read and/or written by said blind.

Finally, it is to be reasserted that the embodiments as hereinbefore illustrated have been given just by way of example and that numerous variations are possible.

It's to be stressed that the particular keys or operating members, intelligible to the blind people, as hereinbefore described, and, particularly the numerical keyboard 21, the keys 25, 28 for activating/disconnecting the telephone line and the answering service, respectively, the means 29, 30, 52 for the verification, respectively, of the level of position of the telephone, of the signal reception of and of position of the charger, could be realized, all or only some of them, also in telephones of conventional type not equipped with means for the printing of SMS messages.

The same also applies to the regulating charger 49 as described hereinbefore which could be used also with an ordinary telephone.

## Claims

1. A telephone comprising :
- interface means (4, 1, 3, 12, 40) arranged to allow the transmission and reception of signals corresponding to vocal and alphanumeric messages; and
- at least a controlling and processing unit (5) for said signals and said means; and
- a first display (105); and
- means (9,10, 10A, 10B) comprising at least a cell (13B) of a Braille bar (101) to make said received messages intelligible to blind people
**characterised in that**
- said Braille bar is movably connected to a seat (21A) of the telephone body (222); and
- said telephone comprises a further display which is bigger than the first display (105), for displaying letters or numbers in large dimension, said further display being movably connected to a seat comprised in the base body (222) of the telephone similar to the seat (21A) to which the Braille bar is movably connected.

2. A telephone according to claim 1, **characterized in that** the means (9, 10) to make the alphanumeric messages intelligible for blind people comprise means (12) fit to deform a support (16) so to engrave on it said alphanumeric message in Braille alphabet.

3. A telephone according to claim 2, **characterized in that** the deformable support is a ribbon (16) and that means (15) are provided for the automatic feeding of such ribbon, means (13) for deforming such ribbon and/or sensory means (16) to detect the presence of said ribbon.

4. A telephone according to claim 1, **characterized in that** the means (9, 10A) to make the alphanumeric messages intelligible to the blind people include members (13B) arranged to modify the position of a plurality of movable tactile elements (20) so that all characters of said alphanumeric messages are reproduced in sequence as Braille alphabet.

5. A telephone according to claim 1, **characterized in that** the means (9, 10B) to make the alphanumeric messages intelligible to the blind people include means (10B) fit to realize a vocal synthesis of said alphanumeric messages.

6. A telephone according to claim 1, **characterized in that** it provides a body (21) arranged to lodge the interface means (1, 3, 4, 12, 40) and the control unit (5) and that also the means (9, 10, 10A, 10B) to make the alphanumeric messages intelligible to the blind people are lodged in said body.

7. A telephone according to claim 1, **characterized in that** the means (40) to allow the blind people to transmit an alphanumeric message provide an alphanumeric keyboard having on the relative keys (40) alphanumeric characters in Braille characters.

8. A telephone according to claim 1, **characterized in that** it provides operating members (43, 44, 45) to activate a function of sending the alphanumeric message and/or acoustic means which confirm that the forwarding has taken place or there was no forwarding, and/or a key (41) to type in a space in the alphanumeric message, and/or a key to activate the dial of numerical characters in alternative to the alphabetical ones (42) and/or a key (43) to select the composition of a SMS message and/or of a key (45) to erase the last selected character, and that on said keys or in their correspondence is provided a sign intelligible to the blind people fit to identify the function of each key.

9. A telephone according to claim 1, **characterized in that** it provides a numerical keyboard (24), in which the number corresponding to each key is given in Braille on the external face of the keys, and/or a key (25) to take-close the telephone line, and/or a key (26) to send the alphanumeric messages, and/or a key (27) to erase an alphanumeric received message, and/or a slide key (28) for the activation-disconnection of an answering service, and/or keys (29) and (30) to activate a function of verification of the level, respectively, of reception of the telephone signal and battery's charge.

10. A telephone according to claim 9, **characterized in that** the keys (29, 30) for verifying the levels of reception of the telephone signal and position of the battery are connected through the control unit (5) of the telephone to a member arranged to give a different acoustic signal for each detected level of reception or charge.

11. A telephone according to claim 9, **characterized in that** on said keys or in correspondence thereof is provided a sign intelligible to blind people fit to identify the function of each key.

12. A telephone according to claim 1, **characterized in that** the faces of all the keys of the telephone have dimensions greater or equal to 4 x 7 (mm).

13. A Telephone according to claim 1, **characterized in that** it comprises a rechargeable battery (35) and a regulating battery charger (49) with means (52) indicating the level of the reached charged, in such a way to be intelligible to the blind people.

14. A telephone according to claim 1 **characterised in that** each single bar (101c) comprises a switch (102) for manually selecting each of said bars.

15. A telephone according to claim 1 comprising a key (103) for reading again a complete message on the Braille bar (101), and/or a key (104) for reading a subsequent string of character on the Braille bar (101), and or a display (105).

16. A telephone according to claim 1 comprising a display for displaying the letters or numbers of the message to be read or to be written in a dimension ranging between 0,5 and 4 cm.

17. A telephone according to claim 1 **characterized in that** it comprises: a plurality of keys (109-111) for accessing and selecting different menu's options of the telephone, and **in that** the telephone control means comprise means for making automatically each of said access or selection intelligible to blind people.

18. A telephone according to claim 17 **characterised in that** the means for making automatically said access or selection intelligible to blind people comprise a Braille bar (101) or means for emitting an acoustic signal or vocal message (103).

19. A telephone according to claim 17 **characterised in that** it comprises a key (111) for cancelling the last selected option of the menu, and/or a movable element (112) for signalling an event which was not detected by the user, and/or a key (116) for selecting one or more of the possible options for making messages and features of the phone intelligible to the blind.

20. A Telephone according to claim 7, **characterised in that** said keys (40) have faces presenting Braille symbols, wherein each caracter is selectable through rotations and pressure of the corresponding key face.

## Patentansprüche

1. Telefon, umfassend:
- Schnittstellenmittel (4, 1, 3, 12, 40), welche angeordnet sind, um die Übertragung und den Empfang von Signalen zu ermöglichen, welche stimmlichen und alphanumerischen Nachrichten entsprechen; und
- mindestens eine Steuer- und Bearbeitungseinheit (5) für die Signale und die Mittel; und
- eine erste Anzeige (105); und
- Mittel (9, 10, 10A, 10B), welche mindestens eine Zelle (13B) einer Blindenschriftleiste (101) umfassen, um die empfangenen Nachrichten für blinde Leute verständlich zu machen,
**dadurch gekennzeichnet,**
- **dass** die Blindenschriftleiste bewegbar mit einer Auflage (21A) des Telefonkörpers (222) verbunden ist; und
- **dass** das Telefon eine weitere Anzeige umfasst, welche größer als die erste Anzeige (105) ist, um Buchstaben oder Zahlen in großer Abmessung darzustellen, wobei die weitere Anzeige bewegbar mit einer Auflage verbunden ist, welche in dem Basiskörper (222) des Telefons vorhanden ist und welche zu der Auflage (21A) ähnlich ist, mit welcher die Blindenschriftleiste bewegbar verbunden ist.

2. Telefon nach Anspruch 1, **dadurch gekennzeichnet, dass** die Mittel (9,10), um die alphanumerische Nachricht für blinde Leute verständlich zu machen, Mittel (12) umfassen, welche angepasst sind, um eine Unterlage (16) derart zu verformen, dass auf ihr die alphanumerische Nachricht im Blindenschriftalphabet eingraviert ist.

3. Telefon nach Anspruch 2, **dadurch gekennzeichnet, dass** die verformbare Unterlage ein Band ist (16) und dass Mittel (15), um das Band automatisch zu befördern, Mittel (13), um das Band zu verformen, und/oder Sensormittel (16), um das Vorhandensein des Bands zu erfassen, vorhanden sind.

4. Telefon nach Anspruch 1, **dadurch gekennzeichnet, dass** die Mittel (9, 10A), um die alphanumerischen Nachrichten für die blinden Leute verständlich zu machen, Elemente (13B) aufweisen, welche angeordnet sind, um die Position einer Mehrzahl von bewegbaren fühlbaren Elementen (20) derart zu verändern, dass alle Zeichen der alphanumerischen Nachrichten nacheinander als Blindenschriftalphabet wiedergegeben werden.

5. Telefon nach Anspruch 1, **dadurch gekennzeichnet, dass** die Mittel (9, 10B), um die alphanumerischen Nachrichten für die blinden Leute verständlich zu machen, Mittel (10B) aufweisen, welche angepasst sind, um eine stimmliche Synthese der alphanumerischen Nachrichten zu realisieren.

6. Telefon nach Anspruch 1, **dadurch gekennzeichnet, dass** es einen Körper (21) bereitstellt, welcher angeordnet ist, um die Schnittstellenmittel (1, 3, 4, 12, 40) und die Steuereinheit (5) aufzunehmen und das auch die Mittel (9, 10, 10A, 10B), um die alphanumerischen Nachrichten für die blinden Leute verständlich zu machen, in dem Körper aufgenommen sind.

7. Telefon nach Anspruch 1, **dadurch gekennzeichnet, dass** die Mittel (40), um den blinden Leuten zu ermöglichen, eine alphanumerische Nachricht zu übertragen, eine alphanumerische Tastatur bereitstellt, welche auf den entsprechenden Tasten (40) alphanumerische Zeichen in Blindenschriftzeichen aufweist.

8. Telefon nach Anspruch 1, **dadurch gekennzeichnet, dass** es bereitstellt Betriebselemente (43, 44, 45), um eine Funktion eines Sendens der alphanumerischen Nachricht zu aktivieren und/oder akustische Mittel, welche bestätigen, dass die Weiterleitung stattgefunden hat oder dass keine Weiterleitung vorlag, und/oder eine Taste (41), um einen Zwischenraum in die alphanumerische Nachricht einzutippen, und/oder eine Taste, um den Nummernschalter der numerischen Zeichen als Alternative zu den alphabetischen (42) zu aktivieren, und/oder eine Taste (43), um die Anordnung einer SMS-Nachricht auszuwählen, und/oder eine Taste (45), um das zuletzt ausgewählte Zeichen zu löschen, und dass auf den Tasten oder in ihrer Entsprechung ein für die blinden Leute verständliches Zeichen vorhanden ist, welches angepasst ist, um die Funktion jeder Taste zu identifizieren.

9. Telefon nach Anspruch 1, **dadurch gekennzeichnet, dass** vorhanden ist eine numerische Tastatur (24), bei welcher die Zahl, welche jeder Taste entspricht, in Blindenschrift auf der äußeren Fläche der Tasten gegeben ist, und/oder eine Taste (25), um die Telefonleitung zu trennen, und/oder eine Taste (26), um die alphanumerischen Nachrichten zu senden, und/oder eine Taste (27), um eine alphanumerische empfangene Nachricht zu löschen, und/oder einen Schiebeschalter (28), um einen Fernsprechauftragsdienst zu aktivieren/unterbrechen, und/oder Tasten (29) und (30), um eine Funktion einer Überprüfung des Niveaus eines Empfangs des Telefonsignals bzw. einer Ladung einer Batterie zu aktivieren.

10. Telefon nach Anspruch 9, **dadurch gekennzeichnet, dass** die Tasten (29, 30), um die Niveaus des Empfangs des Telefonsignals und eine Lage der Batterie zu überwachen, durch die Steuereinheit (5) des Telefons mit einem Element verbunden sind, welches angeordnet ist, um ein unterschiedliches akustisches Signal für jedes erfasste Niveau des Empfangs oder der Ladung auszugeben.

11. Telefon nach Anspruch 9, **dadurch gekennzeichnet, dass** auf den Tasten oder in einer Entsprechung davon ein Zeichen vorhanden ist, welches für blinde Leute verständlich und angepasst ist, um die Funktion jeder Taste zu identifizieren.

12. Telefon nach Anspruch 1, **dadurch gekennzeichnet, dass** die Flächen von all den Tasten des Telefons Abmessungen aufweisen, welche größer oder gleich zu 4 × 7 (mm) sind.

13. Telefon nach Anspruch 1, **dadurch gekennzeichnet, dass** es eine wiederaufladbare Batterie (35) und eine regelnde Batterieaufladevorrichtung (49) mit Mitteln (52), welche das Niveau der erreichten Ladung in solch einer Weise anzeigen, dass es für die blinden Leute verständlich ist, umfasst.

14. Telefon nach Anspruch 1, **dadurch gekennzeichnet, dass** jede einzelne Leiste (101c) einen Schalter (102) umfasst, um jede der Leisten manuell auszuwählen.

15. Telefon nach Anspruch 1, umfassend eine Taste (103), um eine vollständige Nachricht auf der Blindenschriftleiste (101) wiederholt zu lesen, und/oder eine Taste (104), um eine nachfolgende Kette von Buchstaben auf der Blindenschriftleiste (101) zu lesen, und/oder eine Anzeige (105).

16. Telefon nach Anspruch 1, umfassend eine Anzeige, um die Buchstaben oder Zahlen der zu lesenden oder zu schreibenden Nachricht in einer Abmessung darzustellen, welche zwischen 0,5 und 4cm liegt.

17. Telefon nach Anspruch 1, **dadurch gekennzeichnet, dass** es umfasst: eine Mehrzahl von Tasten (109-111), um verschiedene Menüoptionen des Telefons anzusteuern und auszuwählen, und dass die Telefonsteuermittel Mittel umfassen, um jede Ansteuerung oder Auswahl automatisch verständlich für blinde Leute zu machen.

18. Telefon nach Anspruch 17, **dadurch gekennzeichnet, dass** die Mittel, um die Ansteuerung oder Auswahl automatisch für blinde Leute verständlich zu machen, eine Blindenschriftleiste (101) oder Mittel umfassen, um ein akustisches Signal oder eine stimmliche Nachricht (103) auszusenden.

19. Telefon nach Anspruch 17, **dadurch gekennzeichnet, dass** es umfasst eine Taste (111), um die zuletzt ausgewählte Option des Menüs aufzuheben, und/oder ein bewegbares Element (112), um ein Ereignis, welches durch den Benutzer nicht erfasst wurde, anzuzeigen, und/oder eine Taste (116), um eine oder mehrere der möglichen Optionen auszuwählen, um Nachrichten und Merkmale des Telefons für den Blinden verständlich zu machen.

20. Telefon nach Anspruch 7, **dadurch gekennzeichnet, dass** die Tasten (40) Flächen aufweisen, welche Blindenschriftsymbole darstellen, wobei jedes Zeichen durch Drehungen und Druck der entsprechenden Tastenfläche auswählbar ist.

## Revendications

1. Téléphone comprenant :
- des moyens d'interface (4, 1, 3, 12, 40) agencés de façon à rendre possible la transmission et la réception de signaux correspondant à des messages vocaux et alphanumériques ; et
- au moins une unité de commande et de traitement (5) liée aux dits signaux et aux dits moyens ; et
- un premier dispositif d'affichage (105) ; et
- des moyens (9, 10, 10A, 10B) comprenant au moins une cellule (13B) d'une barre de points Braille (101) destinés à rendre lesdits messages reçus intelligibles par des non-voyants;
**caractérisé en ce que**
- ladite barre de points Braille est reliée de façon amovible à un siège (21A) prévu dans le corps du téléphone (222) ; et
- ledit téléphone comprend un autre dispositif d'affichage qui est plus grand que le premier dispositif d'affichage (105), et qui sert à afficher des lettres ou des chiffres en gros caractères, ledit un autre dispositif d'affichage étant relié de façon amovible à un siège prévu dans le corps principal (222) du téléphone d'une façon semblable au siège (21A) auquel la barre de points Braille est reliée de façon amovible.

2. Téléphone selon la revendication 1, **caractérisé en ce que** les moyens (9, 10) destinés à rendre lesdits messages alphanumériques reçus intelligibles par des non-voyants comprennent des moyens (12) qui sont montés de façon à déformer un support (16) de manière à graver ledit message alphanumérique sur lui, en utilisant l'alphabet Braille.

3. Téléphone selon la revendication 2, **caractérisé en ce que** le support déformable est un ruban (16), et **en ce que** des moyens (15) sont prévus pour permettre l'avance automatique de ce ruban, ainsi que des moyens (13) pour déformer ce ruban et / ou des moyens sensoriels (16) pour détecter la présence dudit ruban.

4. Téléphone selon la revendication 1, **caractérisé en ce que** les moyens (9, 10A) destinés à rendre lesdits messages alphanumériques reçus intelligibles par des non-voyants comprennent des éléments (13B) qui sont agencés de façon à modifier la position d'une pluralité d'éléments tactiles mobiles (20) de manière à ce que tous les caractères desdits messages alphanumériques puissent être reproduits en séquence en alphabet Braille.

5. Téléphone selon la revendication 1, **caractérisé en ce que** les moyens (9, 10B) destinés à rendre lesdits messages alphanumériques reçus intelligibles par des non-voyants comprennent des moyens (10B) qui sont montés afin de réaliser une synthèse vocale desdits messages alphanumériques.

6. Téléphone selon la revendication 1, **caractérisé en ce qu'**il procure un corps (21) qui est configuré de façon à abriter les moyens d'interface (1, 3, 4, 12, 40) et l'unité de commande (5), et **en ce que** les moyens (9, 10, 10A, 10B) destinés à rendre lesdits messages alphanumériques reçus intelligibles par des non-voyants sont eux aussi logés à l'intérieur dudit corps.

7. Téléphone selon la revendication 1, **caractérisé en ce que** les moyens (40) destinés à permettre à des non-voyants de transmettre un message alphanumérique, procurent un clavier alphanumérique qui porte, sur les touches relatives (40), des caractères alphanumériques en alphabet Braille.

8. Téléphone selon la revendication 1, **caractérisé en ce qu'**il procure des éléments d'activation (43, 44, 45) qui permettent d'activer une fonction consistant à envoyer le message alphanumérique et / ou des moyens acoustiques qui confirment que le message a été envoyé, ou non, et / ou une touche (41) qui permet de taper un espace dans le message alphanumérique, et / ou une touche qui permet d'activer le cadran composé de caractères numériques au lieu du cadran de caractères alphabétiques (42) et / ou une touche (43) qui permet de sélectionner la composition d'un message SMS et / ou une touche (45) qui permet d'effacer le dernier caractère sélectionné, et **en ce que**, sur lesdites touches ou en rapport avec elles, un signe intelligible par des non-voyants est fourni qui sert à identifier la fonction de chaque touche.

9. Téléphone selon la revendication 1, **caractérisé en ce qu'**il procure un clavier numérique (24) dans lequel le chiffre correspondant à chaque touche est écrit en Braille sur la face externe des touches, et / ou une touche (25) qui permet d'ouvrir ou de fermer la ligne de téléphone, et / ou une touche (26) qui permet d'envoyer les messages alphanumériques, et / ou une touche (27) qui permet d'effacer un message alphanumérique reçu, et/ou une touche coulissante (28) qui permet d'activer et de désactiver un service de répondeur, et / ou des touches (29) et (30) qui permettent d'activer une fonction de vérification du niveau, respectivement, de réception du signal téléphonique et de charge de la batterie.

10. Téléphone selon la revendication 9, **caractérisé en ce que** les touches (29, 30) qui permettent de vérifier le niveau de réception du signal téléphonique et le niveau de charge de la batterie sont connectées, par le biais de l'unité de commande (5) du téléphone, à un élément agencé de façon à fournir un signal acoustique différent pour chacun des niveaux détectés, de réception ou de charge.

11. Téléphone selon la revendication 9, **caractérisé en ce que**, sur lesdites touches ou en rapport avec elles, un signe intelligible par des non-voyants est fourni qui sert à identifier la fonction de chaque touche.

12. Téléphone selon la revendication 1, **caractérisé en ce que** les faces de l'ensemble des touches du téléphone ont des dimensions supérieures ou égales à 4 x 7 (mm).

13. Téléphone selon la revendication 1, **caractérisé en ce qu'**il comprend une batterie rechargeable ainsi qu'un chargeur de batterie contrôlable (49) muni de moyens (52) indiquant le niveau de charge atteint de la batterie, de façon à ce qu'il soit intelligible par les non-voyants.

14. Téléphone selon la revendication 1, **caractérisé en ce que** chacune des différentes barres (101c) comprend un contacteur (102) qui permet de sélectionner manuellement chacune desdites barres.

15. Téléphone selon la revendication 1 comprenant une touche (103) qui permet de lire à nouveau un message complet sur la barre de points Braille (101), et / ou une touche (104) qui permet de lire une chaîne consécutive de caractères sur la barre de points Braille (101), et ou un dispositif d'affichage (105).

16. Téléphone selon la revendication 1 comprenant un dispositif d'affichage qui permet d'afficher les lettres ou les chiffres du message qui doit être lu ou qui doit être écrit, dans une taille de caractères comprise entre 0,5 cm et 4 cm.

17. Téléphone selon la revendication 1 **caractérisé en ce qu'**il comprend : une pluralité de touches (109-111) qui permettent d'accéder à, et de sélectionner, différentes options de menu du téléphone, et **en ce que** les moyens de commande du téléphone comprennent des moyens pour rendre chacun desdits accès ou chacune desdites sélections automatiquement intelligible par des non-voyants.

18. Téléphone selon la revendication 17, **caractérisé en ce que** les moyens destinés à rendre ledit accès ou ladite sélection automatiquement intelligible par des non-voyants comprend une barre de points Braille (101) ou des moyens destinés à émettre un signal acoustique ou un message vocal (103).

19. Téléphone selon la revendication 17, **caractérisé en ce qu'**il comprend une touche (111) pour annuler la dernière option de menu sélectionnée, et / ou un élément mobile (112) pour signaler un événement qui n'a pas été détecté par l'utilisateur, et / ou une touche (116) pour sélectionner une ou plusieurs des options possibles destinées à rendre les messages et les caractéristiques du téléphone intelligibles par des non-voyants.

20. Téléphone selon la revendication 7, **caractérisé en ce que** lesdites touches (40) présentent des faces qui comportent des symboles en Braille, dans lequel chaque caractère est sélectionnable par le biais de rotations et de pressions exercées sur la face de la touche correspondante.
